# EUROPEAN PATENT APPLICATION

(11) **EP 4 571 606 A1**
(43) Date of publication of application: **18.06.2025**
(21) Application number: 23851865.8
(22) Date of filing: 09.08.2023
(51) Int. Cl.: G06Q 10/04, G21C 19/19

(54) **NUCLEAR FUEL CHARGING/DISCHARGING AND POSITION AUTOMATIC TRACKING SYSTEM AND METHOD**

(30) Priority: 10.08.2022 CN 202210956195
(71) Applicant: Shanghai Nuclear Engineering Research & Design Institute Co., Ltd., Shanghai 200233 (CN)
(72) Inventor: HONG, Qian, Shanghai 200233 (CN); YANG, Bo, Shanghai 200233 (CN); HAO, Haoran, Shanghai 200233 (CN); WU, Guikai, Shanghai 200233 (CN); SHEN, Yanrong, Shanghai 200233 (CN); YANG, Qingxiang, Shanghai 200233 (CN); DANG, Halei, Shanghai 200233 (CN)
(74) Representative: Rebbereh, Cornelia
(86) International application number: PCT/CN2023/111897
(87) International publication number: WO 2024/032644

(57) **Abstract**

The present invention provides a nuclear fuel charging/discharging and position automatic tracking system and method. The system comprises: fuel assemblies, provided with first identification information capable of uniquely identifying the fuel assemblies; inserts, arranged in the fuel assemblies and provided with second identification information capable of uniquely identifying the inserts; a system database, storing reactor core arrangement information and spent fuel pool arrangement information; and a processing device, which, according to the current reactor core arrangement information and the spent fuel pool arrangement information, establishes a correspondence relationship with preset reactor core arrangement information of a next cycle, and configures shuffling movement information of each fuel assembly and a corresponding insert thereof, so as to generate a shuffling scheme. The present invention automatically generates a shuffling scheme according to the reactor core arrangement information and the spent fuel pool arrangement information in the system database of its own, so as to simplify the data processing and conversion operation during charging/discharging processes, thus improving the working efficiency, and reducing the risk of reactor core charging/discharging operation errors, and ensuring the operation safety of reactor cores.

## Description

### CROSS-REFERENCE TO RELATED APPLICATIONS

This application claims priority to the Chinese Patent Application No. 202210956195.1, filed on August 10, 2022 and titled "Nuclear Fuel Charging/Discharging and Position Automatic Tracking Method, Device and System", which is incorporated herein by reference in its entirety.

### TECHNICAL FIELD

The present application relates to the technical field of nuclear reactor charging/discharging.

### BACKGROUND

For pressurized water reactor nuclear power plants, it is necessary to adjust the arrangement of nuclear fuel assemblies in the core by charging/discharging periodically (known as one fuel cycle). The implementing of charging/discharging usually requires manual preparation of a discharging schedule and operation of a charging/discharging machine according to the schedule, and the workload of data processing and conversion is large, which is not only inefficient but also error-prone. Sometimes, core charging errors may even occur, thereby affecting the core safety.

At present, the charging/discharging of existing reactors in nuclear power plants is mainly implemented by manually making a reactor refueling scheme. In the charging and discharging of the reactor, a refueling engineer makes the reactor refueling scheme by completely relying on his or her own experience, this kind of refueling method involves extremely high workload and high possibility of human error. Even if it is ensured that there is no human error, refueling schemes selected by different refueling engineers for cores in the same condition may still vary greatly. On the one hand, this results in a failure to optimize the operation of nuclear power units, and on the other hand, it leads to extremely high on-site workload and responsibilities of the refueling engineer.

With the development and gradual maturity of computer technology, people began to use computer programs to realize the movement management of nuclear fuel. In the related art, a movement sequence diagram of fuel assemblies is created and graphically displayed mainly based on a storage status generated in advance, and finally the storage status of the fuel assemblies is updated. However, it is impossible for such a solution to create a movement sequence diagram more efficiently and to save the time required for the actual refueling operation of the nuclear power plant more effectively.

### SUMMARY

In view of the problems existing in the related art, the present disclosure provides a nuclear fuel charging/discharging and position automatic tracking system and method, which can automatically make a refueling scheme, simplify the data processing and conversion in the charging/discharging process, and realize the position tracking of fuel assemblies.

A first aspect of the present disclosure provides a nuclear fuel charging/discharging and position automatic tracking system, including:
fuel assemblies provided with first identification information capable of uniquely identifying the fuel assemblies;
inserts arranged in the fuel assemblies and provided with second identification information capable of uniquely identifying the inserts;
a system database storing core arrangement information and spent fuel pool arrangement information, wherein the core arrangement information includes the first identification information corresponding to each of the fuel assemblies in a core of a nuclear reactor, the second identification information corresponding to each of the inserts in the core of the nuclear reactor, correspondence information of each fuel assembly and its corresponding insert in the core of the nuclear reactor, and position information of each fuel assembly in the core of the nuclear reactor, and the spent fuel pool arrangement information includes the first identification information corresponding to each of the fuel assemblies in a spent fuel pool, the second identification information corresponding to each of the inserts in the spent fuel pool, correspondence information of each fuel assembly and its corresponding insert in the spent fuel pool, and position information of each fuel assembly in the spent fuel pool; and
a processing device configured to establish correspondence with preset core arrangement information of a next cycle, and configure refueling movement information for each of the fuel assemblies and its corresponding insert according to current core arrangement information and current spent fuel pool arrangement information, so as to generate a refueling scheme.

Preferably, the processing device includes: a relationship establishing module configured to obtain the current core arrangement information and the current spent fuel pool arrangement information, and establish correspondence with the preset core arrangement information of the next cycle according to the current core arrangement information and the current spent fuel pool arrangement information; and a refueling scheme generating module configured to configure corresponding refueling movement information for fuel assemblies and their corresponding inserts in the preset core arrangement information of the next cycle according to the correspondence of the current core arrangement information and the current spent fuel pool arrangement information with the preset core arrangement information of the next cycle, so as to generate the refueling scheme.

Preferably, the relationship establishing module includes: an information merging module configured to read the current core arrangement information and the current spent fuel pool arrangement information from the system database, and merge the current core arrangement information and the current spent fuel pool arrangement information to form first spent fuel pool arrangement information; and a correspondence establishing module configured to establish correspondence consistent with the preset core arrangement information of the next cycle according to the first identification information corresponding to each fuel assembly and the second identification information corresponding to each insert in the first spent fuel pool arrangement information, so as to form second spent fuel pool arrangement information.

Preferably, the correspondence establishing module includes: a first traversal module configured to traverse the first identification information of all fuel assemblies and the second identification information of their corresponding inserts in the first spent fuel pool arrangement information; a judging module configured to judge whether the first identification information and the second identification information traversed by the first traversal module are consistent with the preset core arrangement information of the next cycle; a corresponding module configured to establish correspondence, which is consistent with the preset core arrangement information of the next cycle, between the first identification information of all fuel assemblies to be moved into the core and the second identification information of inserts in the first spent fuel pool arrangement information, so as to form the second spent fuel pool arrangement information; and a second traversal module configured to traverse the second spent fuel pool arrangement information and input the first identification information of fuel assemblies and the second identification information of their corresponding inserts that appear in the preset core arrangement information of the next cycle into the refueling scheme generating module, so as to configure corresponding refueling movement information.

Preferably, the nuclear fuel charging/discharging and position automatic tracking system according to the present disclosure further includes: an identifying device configured to identify the first identification information of the fuel assemblies and the second identification information of their corresponding inserts; and a charging/discharging machine configured to communicate with the processing device and execute operation instructions sent by the processing device according to the refueling scheme, so as to realize movement of the fuel assemblies and the inserts.

Preferably, the charging/discharging machine includes a communication device, a driving device and a movement execution device,
the communication device is configured to receive and store the refueling scheme pushed by the processing device;
the driving device is configured to drive, after receiving the refueling scheme, the movement execution device to sequentially execute movement actions of the fuel assemblies and their corresponding inserts according to the refueling scheme; and
the movement execution device is configured to execute a movement action after the identifying device identifies the first identification information of a corresponding fuel assembly and the second identification information of its corresponding insert.

Preferably, the nuclear fuel charging/discharging and position automatic tracking system according to the present disclosure further includes an alarming device and a monitoring device,
the monitoring device communicates with the processing device and is configured to monitor whether a moving position of the charging/discharging machine or a clamped fuel assembly is consistent with information in the refueling scheme; and
the alarming device communicates with the processing device and is configured to issue an alarm when a monitoring result of the monitoring device shows that the moving position of the charging/discharging machine or the clamped fuel assembly is inconsistent with the information in the refueling scheme.

Preferably, the correspondence information includes first correspondence information and second correspondence information,
the first correspondence information includes the first identification information of the fuel assemblies and their position information, and start time and end time when correspondence between the fuel assemblies and their positions is established and ends; and
the second correspondence information includes the second identification information of the inserts and their position information, and start time and end time when correspondence between the inserts and their positions is established and ends.

Preferably, the processing device further includes an information updating module. The information updating module is configured to update the correspondence information when the fuel assemblies or the inserts enter or leave from a certain position in the core of the nuclear reactor or the spent fuel pool.

Preferably, the processing device further includes a distribution monitoring module. The distribution monitoring module is configured to analyze and obtain a distribution situation of all of the fuel assemblies and the inserts by searching for records, in which the start time is not empty and the end time is empty, in the correspondence information.

Preferably, the processing device further includes an information tracking module, the system database further stores a historical record of the correspondence information, and the information tracking module is adapted to track a position change and a movement situation of the fuel assemblies and the inserts by reading the historical record of the correspondence information.

A second aspect of the present disclosure provides a nuclear fuel charging/discharging and position automatic tracking method, which is implemented by using the above-mentioned nuclear fuel charging/discharging and position automatic tracking system. The method includes the following steps of:
obtaining the current core arrangement information and the current spent fuel pool arrangement information, and obtaining the correspondence with the preset core arrangement information of the next cycle according to the current core arrangement information and the current spent fuel pool arrangement information;
obtaining, according to the correspondence of the current core arrangement information and the current spent fuel pool arrangement information with the preset core arrangement information of the next cycle, the refueling movement information of fuel assemblies and their corresponding inserts that are to appear in the preset core arrangement information of the next cycle; and
generating the refueling scheme according to the refueling movement information.

In the nuclear fuel charging/discharging and position automatic tracking system and method according to the present disclosure, a refueling scheme is automatically generated according to the core arrangement information and the spent fuel pool arrangement information in its own system database, thereby simplifying the data processing and conversion in the charging/discharging process, improving the work efficiency, reducing the risk of errors in core charging/discharging operations, and ensuring the safety of core running.

By updating the position changes of fuel assemblies and related assemblies through this system, and comparing the same with a pre-established charging/discharging plan, the automation of fuel charging/discharging and position tracking, the automatic tracking of core charging, and the shortening of shutdown and overhaul time are realized.

### BRIEF DESCRIPTION OF THE DRAWINGS

In order to explain the technical solutions of the embodiments of the present application more clearly, the drawings required to be used in the embodiments of the present application will be briefly introduced below.
FIG. 1 is a schematic diagram of a nuclear fuel charging/discharging and position automatic tracking system according to a specific embodiment of the present disclosure;
FIG. 2 is a schematic diagram of the core arrangement according to a specific embodiment of the present disclosure;
FIG. 3 is a schematic diagram of the spent fuel pool arrangement according to a specific embodiment of the present disclosure;
FIG. 4 is a functional block diagram of a processing device according to a specific embodiment of the present disclosure;
FIG. 5 is a functional block diagram of a charging/discharging machine according to a specific embodiment of the present disclosure;
FIG. 6 is a schematic diagram of a nuclear fuel charging/discharging and position automatic tracking system according to another embodiment of the present disclosure; and
FIG. 7 is a flowchart of a nuclear fuel charging/discharging and position automatic tracking method according to a specific embodiment of the present disclosure.

### Reference numbers:

100-Nuclear fuel charging/discharging and position automatic tracking system;
10-Fuel assembly;
20-Insert;
   201-Resistance plug;
   202-Control rod;
   203-Primary neutron source;
   204-Secondary neutron source;
   205-Burnable poison;
30-System database;
40-Processing device;
   401-Relationship establishing module;
      403-Information merging module;
      404-Correspondence establishing module;
         405-First traversal module;
         406-Judging module;
         407-Corresponding module;
         408-Second traversal module;
   402-Refueling scheme generating module;
   409-Information updating module;
   410-Distribution monitoring module;
   411-Information tracking module;
50-Identifying device;
60-Charging/discharging machine;
   601-Communication device;
   602-Driving device;
   603-Movement execution device;
70-Alarming device;
80-Monitoring device;
90-Spent fuel pool.

### DETAILED DESCRIPTION

In order to better understand the technical solutions of the present application, the embodiments of the present application will be described in detail below in conjunction with the accompanying drawings.

In the related art, the movement management of nuclear fuel relies more on manpower and experience. In this way, the nuclear power core refueling process is time-consuming, error-prone, and inconvenient to use, only the movement status of fuel assemblies of the current factory building may be reflected, and the movement status of fuel assemblies in another factory building may not be reflected. Even with the help of computers, the only operation realized is to display the storage status of nuclear fuel graphically, while the data is still incompatible between the nuclear fuel movement management system and the fuel storage system, and it is impossible to generate a refueling scheme automatically by relying on the computer. Furthermore, continuous monitoring, tracking and feedback of the movement process of nuclear fuel assemblies are not realized in the prior art.

The present disclosure provides a nuclear fuel charging/discharging and position automatic tracking system and method, wherein by designing a specific data storage structure, the recording of fuel assemblies and related components in the nuclear power plant is realized, and a refueling scheme for driving the charging/discharging machine to operate automatically can be made without manual intervention. When the charging/discharging machine moves to the designated position, a network signal is sent, and the system updates the position changes of the fuel assemblies and related inserts and compares the same with the pre-established charging/discharging plan, so as to realize the automation of fuel charging/discharging and position tracking.

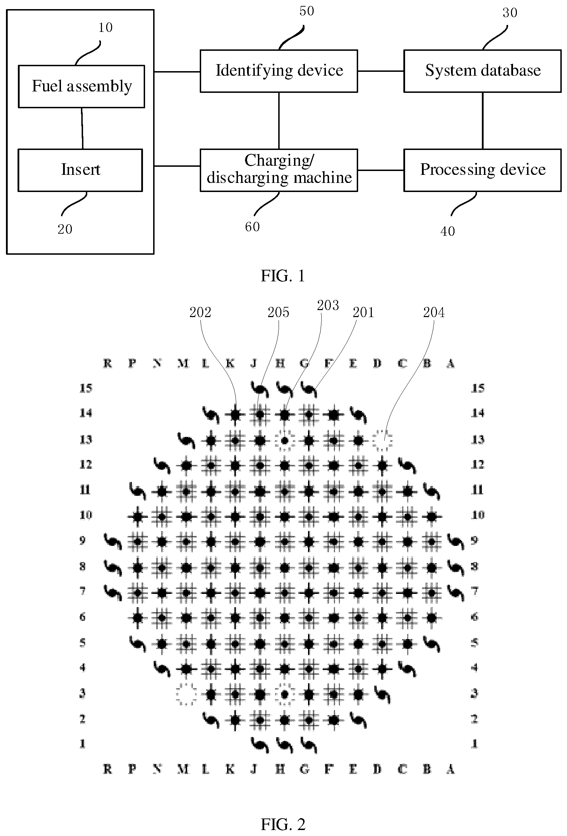

FIG. 1 is a schematic diagram of a nuclear fuel charging/discharging and position automatic tracking system 100 according to a specific embodiment of the present disclosure.

As shown in FIG. 1, the nuclear fuel charging/discharging and position automatic tracking system 100 according to the present disclosure includes a fuel assembly 10, an insert 20, a system database 30, a processing device 40, an identifying device 50 and a charging/discharging machine 60.

The fuel assembly 10 is provided with first identification information capable of uniquely identifying the fuel assembly 10.

The insert 20 is a device which is inserted into the fuel assembly 10 and plays a role in core power control. The insert 20 is provided in the fuel assembly 10 and is provided with second identification information capable of uniquely identifying the insert 20.

The first identification information of the fuel assembly 10 and the second identification information of the insert 20 may be in any form of texts, numbers, graphics, or combinations thereof.

The system database 30 stores core arrangement information and spent fuel pool arrangement information.

FIG. 2 is a schematic diagram of core arrangement according to a specific embodiment of the present disclosure.

As shown in FIG. 2, in the core arrangement according to a specific embodiment of the present disclosure, one insert 20 can be placed in each nuclear fuel assembly 10, different pattern marks represent different types of inserts 20, and each insert 20 corresponds to one fuel assembly 10. In FIG. 2, the insert 20 includes a resistance plug 201, a control rod 202, a primary neutron source 203, a secondary neutron source 204, and a burnable poison 205, etc. The core arrangement composed of these fuel assemblies 10 and corresponding inserts 20 in FIG. 2 is only an example of the present disclosure and does not limit the present disclosure.

The horizontal letters and vertical numbers in FIG. 2 represent the grid coordinate information corresponding to the positions of the fuel assemblies 10. Each fuel assembly 10 has a unique code (i.e., first identification information), and each insert 20 has a unique code (i.e., second identification information). These codes remain globally unique, and their specific forms are not limited. Depending on the reactor model, the core and its associated spent fuel pool 90 contain several positions, and each of the positions has a unique code. Each fuel assembly 10 in the core includes one insert 20 inside. The correspondence between the fuel assemblies 10, the inserts 20 and the positions thereof in the core is referred to as the core arrangement.

The core arrangement information includes the first identification information corresponding to each fuel assembly 10 in the core of the nuclear reactor, the second identification information corresponding to each insert 20, correspondence information of each fuel assembly 10 and its corresponding insert 20 and position information of each fuel assembly 10 in the core of the nuclear reactor.

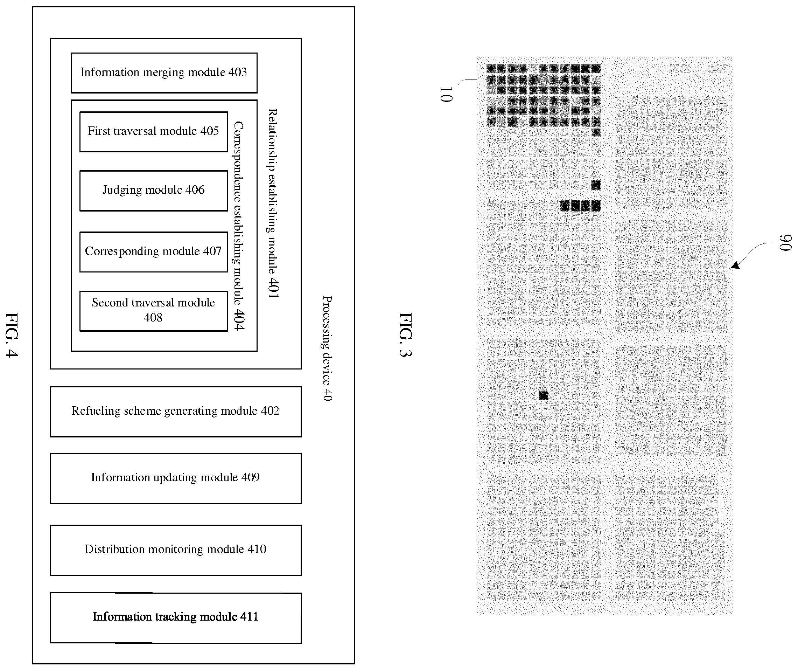

FIG. 3 is a schematic diagram of the spent fuel pool arrangement according to a specific embodiment of the present disclosure.

As shown in FIG. 3, the consumed fuel assemblies 10 in the core will be temporarily stored in the spent fuel pool 90 associated with the core. The correspondence between the fuel assemblies 10, the inserts 20, and the positions thereof in the spent fuel pool 90 is referred to as the spent fuel pool arrangement. When performing the refueling operation of the fuel assemblies 10 in the core, all the fuel assemblies 10 in the core are usually moved into the spent fuel pool 90, and then fuel assemblies 10 are rearranged in the core according to a preset refueling plan.

The spent fuel pool arrangement information includes the first identification information corresponding to each fuel assembly 10 in the spent fuel pool 90, the second identification information corresponding to each insert 20 in the spent fuel pool 90, correspondence information of each fuel assembly 10 and its corresponding insert 20, and position information of each fuel assembly 20 in the spent fuel pool 90.

In an embodiment, the correspondence information of each fuel assembly 10 and its corresponding insert 20 includes first correspondence information and second correspondence information.

The first correspondence information includes the first identification information of the fuel assembly 10 and information of a position at which the fuel assembly 10 is located, and start time and end time when correspondence between the fuel assembly 10 and its position is established and ended.

The second correspondence information includes the second identification information of the insert 20 and information of a position at which the insert 20 is located, and start time and end time when correspondence between the insert 20 and its position is established and ended.

The first correspondence information and the second correspondence information can be stored in the form of two linked lists in the system database 30. By traversing the two linked lists, one can search for records, in which the start time is not empty and the end time is empty, in the correspondence information, analyze and obtain the distribution situation of all fuel assemblies 10 and inserts 20, represent data of the distribution situation in a graphical interface in the form of texts, graphics, colors and combinations thereof, and store the data in the system database 30.

Specifically, the first correspondence information is stored in the system database 30 in the form of a first data structure, and the second correspondence information is stored in the system database 30 in the form of a second data structure.

The expression form of the first data structure is shown in Table 1.

**Table 1: First data structure**

| Serial number | Field |
|---|---|
| 1 | Fuel assembly code |
| 2 | Position code |
| 3 | Start time of fuel assembly-position correspondence |
| 4 | End time of fuel assembly-position correspondence |

The expression form of the second data structure is shown in Table 2.

**Table 2: Second data structure**

| Serial number | Field |
|---|---|
| 1 | Insert code |
| 2 | Position code |
| 3 | Start time of insert-position correspondence |
| 4 | End time of insert-position correspondence |

Through the first data structure of Table 1 and the second data structure of Table 2, the distribution of the fuel assemblies 10 and the inserts 20 of the nuclear power plant is recorded, and the history of the position changes of the fuel assemblies 10 and the inserts 20 is traced. By appending and updating data, position changes of the fuel assemblies 10 and inserts 20 can be tracked.

The types of the insert 20 of the fuel assembly 10 may at least include various types such as a resistance plug 201, a control rod 202, a primary neutron source 203, a secondary neutron source 204 and a burnable poison 205, and the insert 20 is generally composed of 24 rods. The grid of the fuel assembly 10 contains 264 fuel rods and 24 insert guide tubes, the planar distribution of the rods of the insert 20 is consistent with the guide tubes of the grid of the fuel assembly 10, and thus the insert 20 can be installed on the fuel assembly 10.

In the present disclosure, the step of autonomously collecting data is completed by arranging the insert 20 in the fuel assembly 10 and recording the data of the insert 20 in the system database 30 through the network, thereby realizing the automatic collection and saving of data of the fuel assembly 10 and providing data support for subsequent automatic generation of a refueling scheme.

The processing device 40 establishes correspondence with the preset core arrangement information of the next cycle according to the current core arrangement information and the current spent fuel pool arrangement information, and configures refueling movement information of each fuel assembly 10 and its corresponding insert 20, so as to generate the refueling scheme.

The refueling scheme involves operation steps to transition the arrangement of the fuel assemblies 10 and the inserts 20 in the reactor from the current state to the target state. In this embodiment, the current state is the core arrangement state corresponding to the core arrangement information, and the target state is the core arrangement state corresponding to the preset core arrangement information of the next cycle.

The identifying device 50 identifies the first identification information of the fuel assembly 10 and the second identification information of the insert 20.

The identifying device 50 may be a machine vision identifying device, such as a camera, a video camera, an infrared light identifying device or a laser identifying device, etc. The identifying device 50 may also be an induction identifying device, in this case, the insert 20 is provided inside with an induction device corresponding to the identifying device 50, configured to record the information of the insert 20 and provide the information of the insert 20 to the induction identifying device in response to receiving a signal from the induction identifying device.

The identifying device 50 transmits the information identified from the insert 20 to the system database 30 through the network. The network may be a wide area network with security measures or a local area network.

The charging/discharging machine 60 realizes the movement of each fuel assembly 10 and each insert 20. The charging/discharging machine 60 communicates with the processing device 40 and executes the operation instructions sent by the processing device 40 according to the refueling scheme.

The charging/discharging machine 60 receives and stores the automatically generated refueling scheme, sequentially identifies the first identification information of the corresponding fuel assembly 10 and the second identification information of the insert 20 provided on the fuel assembly 10 according to the refueling scheme, and executes the movement actions of the fuel assembly 10 and the insert 20 provided on the fuel assembly 10 or the movement action of the insert 20 according to the refueling movement information, after identifying the first identification information of the fuel assembly 10 and the second identification information of the insert 20 provided on the fuel assembly 10.

In a specific embodiment, the identifying device 50 may be integrated on the charging/discharging machine 60.

By the nuclear fuel charging/discharging and position automatic tracking system of this embodiment, the recording of the fuel assembly 10 and its corresponding insert 20 in the nuclear power plant is realized, and a refueling scheme can be made and generated without manual intervention. The refueling scheme can be used to drive the charging/discharging machine 60 to operate automatically. When the charging/discharging machine 60 moves to the designated position, the position changes of the fuel assemblies 10 and related inserts 20 can be updated and compared with the pre-established charging/discharging plan, so as to realize the automation of fuel charging/discharging and position tracking.

FIG. 4 is a functional block diagram of the processing device 40 according to a specific embodiment of the present disclosure.

As shown in FIG. 4, the processing device 40 includes a relationship establishing module 401 and a refueling scheme generating module 402.

The relationship establishing module 401 is used to obtain the current core arrangement information and the current spent fuel pool arrangement information, and establish correspondence with the preset core arrangement information of the next cycle according to the current core arrangement information and the current spent fuel pool arrangement information.

The refueling scheme generating module 402 is used to configure corresponding refueling movement information for fuel assemblies 10 and their corresponding inserts 20 in the preset core arrangement information of the next cycle according to the correspondence of the current core arrangement information and the current spent fuel pool arrangement information with the preset core arrangement information of the next cycle, so as to generate a refueling scheme.

The relationship establishing module 401 includes an information merging module 403 and a correspondence establishing module 404.

The information merging module 403 is used to read the current core arrangement information and the current spent fuel pool arrangement information from the system database 30, and merge the current core arrangement information and the current spent fuel pool arrangement information from the system database 30 to form first spent fuel pool arrangement information.

The first spent fuel pool arrangement information is generated by the information merging module 403. When the charging/discharging machine 60 executes the generated refueling scheme, it can realize that all the fuel assemblies and inserts in the core are moved into the spent pool according to the arrangement situation of the fuel assemblies and inserts in the current core, and a first spent pool arrangement diagram is formed.

The correspondence establishing module 404 establishes correspondence, which is consistent with the preset core arrangement information of the next cycle, between the first identification information corresponding to each fuel assembly 10 and the second identification information corresponding to each insert 20 in the first spent fuel pool arrangement information, so as to form second spent fuel pool arrangement information.

The refueling scheme generating module 402 configures corresponding refueling movement information for the first identification information of each fuel assembly 10 and the second identification information of its corresponding insert 20 in the preset core arrangement information of the next cycle, and automatically generates the refueling scheme based on the first spent fuel pool arrangement information, the second spent fuel pool arrangement information and the refueling movement information.

In a specific embodiment, the correspondence establishing module 404 includes a first traversal module 405, a judging module 406, a corresponding module 407 and a second traversal module 408.

The first traversal module 405 is used to traverse the first identification information of all fuel assemblies and the second identification information of their corresponding inserts in the first spent fuel pool arrangement information.

The judging module 406 is used to judge whether the first identification information and the second identification information traversed by the first traversal module are consistent with the preset core arrangement information of the next cycle.

The corresponding module 407 is used to establish correspondence, which is consistent with the preset core arrangement information of the next cycle, between the first identification information of all fuel assemblies to be moved into the core and the second identification information of inserts in the first spent fuel pool arrangement information, so as to form the second spent fuel pool arrangement information;

Specifically, the first traversal module 405 traverses the first identification information of all fuel assemblies and the second identification information of their corresponding inserts in the first spent fuel pool arrangement information; if the judging module 406 determines that the second identification information of an insert 20 provided for a certain fuel assembly 10 is inconsistent with the preset core arrangement information of the next cycle, the corresponding module 407 establishes correspondence between the second identification information of the insert 20 provided for this fuel assembly 10 and the first identification information of a target fuel assembly 10; and if the judging module 406 determines that the second identification information of an insert 20 that is inconsistent with the preset core arrangement information of the next cycle already exists on the target fuel assembly 10, the corresponding module 407 establishes correspondence between the second identification information of this insert 20 and the first identification information of a fuel assembly 10 that does not contain an insert 20 in the first spent fuel pool arrangement information, until correspondence consistent with the preset core arrangement information of the next cycle is established between the first identification information of all the fuel assemblies 10 to be moved into the core and the second identification information of the inserters 20 in the first spent fuel pool arrangement information, so as to form second spent fuel pool arrangement information.

Through the above steps, all the fuel assemblies 10 in the first spent pool arrangement diagram can be traversed; if the corresponding insert 20 is inconsistent with the preset core arrangement information of the next cycle, the insert 20 is moved onto the target fuel assembly 10; and the insert 20 is moved to a fuel assembly 10 that does not contain an insert 20 in the spent fuel pool 90 if there is already an insert 20 on the target fuel assembly 10, until correspondence between all the fuel assemblies 10 to be moved into the core and the inserts 20 in the spent fuel pool 90 is consistent with the preset core arrangement information of the next cycle, so as to form a second spent pool arrangement diagram.

The second traversal module 408 is used to traverse the second spent fuel pool arrangement information and input the first identification information of the fuel assemblies 10 and the second identification information of their corresponding inserts 20 that appear in the preset core arrangement information of the next cycle into the refueling scheme generating module 402, so as to configure corresponding refueling movement information.

The refueling scheme is automatically generated based on the first spent fuel pool arrangement information, the second spent fuel pool arrangement information and the refueling movement information. The refueling scheme may specifically include the refueling movement information, the first identification information of the fuel assembly 10 to be moved and the second identification information of its insert 20. The refueling movement information includes refueling sequence information, initial position information and target position information corresponding to the fuel assembly 10 to be moved and its insert 20. The refueling scheme is stored in the system database 30 in the form of a third data structure.

Specifically, the third data structure is shown in Table 3.

**Table 3: Third data structure**

| Serial number | Field |
|---|---|
| 1 | Discharging sequence number |
| 2 | Source position code |
| 3 | Target position code |
| 4 | Code of moving fuel assembly |
| 5 | Code of moving insert |

The specific data structure of the present disclosure enables accurate recording of the reactor charging/discharging process and status data. This process does not require manual intervention at all and complete automation is achieved.

The charging/discharging machine 60 can traverse the second spent pool arrangement diagram when executing the generated refueling scheme. If a fuel assembly 10 appears in the preset core arrangement information of the next cycle, then the fuel assembly 10 and its corresponding insert 20 are moved into the core according to the correspondence between the fuel assembly 10 and the insert 20 in the preset core arrangement information of the next cycle.

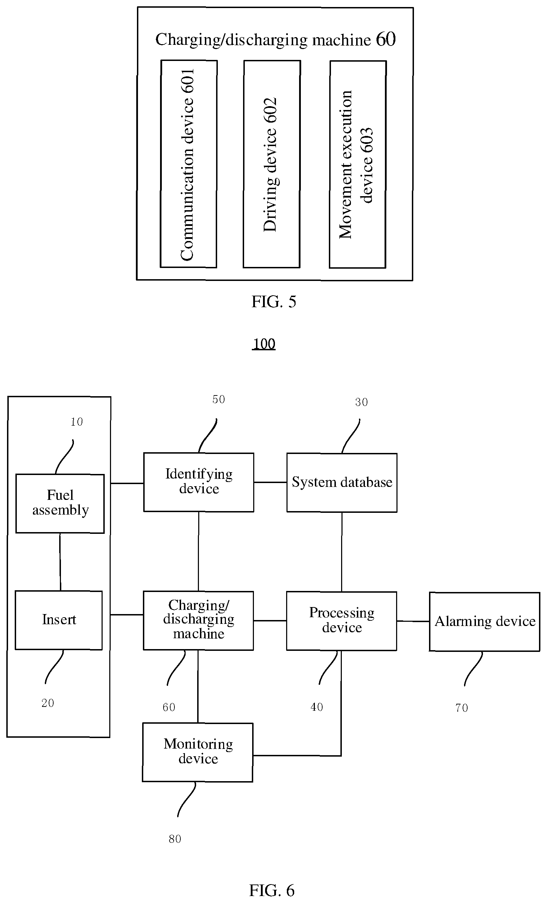

FIG. 5 is a functional block diagram of the charging/discharging machine 60 according to a specific embodiment of the present disclosure.

As shown in FIG. 5, in a specific embodiment, the charging/discharging machine 60 includes a communication device 601, a driving device 602 and a movement execution device 603.

The communication device 601 receives and stores the refueling scheme pushed by the processing device 40.

The driving device 602 drives, after receiving the refueling scheme, the movement execution device 603 to sequentially execute movement actions of the fuel assemblies 10 and their corresponding inserts 20 according to the refueling scheme.

The movement execution device 603 executes the movement actions after the identifying device 50 identifies the first identification information of the corresponding fuel assembly 10 and the second identification information of its corresponding insert 20.

The communication device 601 is also used to send a network signal to the processing device 40 when the movement execution device 603 moves the fuel assembly 10 out of the initial position or into the target position. The network signal includes movement sequence information and a movement identifier which describes an action direction of the movement execution device 603 when sending the network signal.

FIG. 6 is a schematic diagram of a nuclear fuel charging/discharging and position automatic tracking system 100 according to another embodiment of the present disclosure.

As shown in FIG. 6, in another specific embodiment, the nuclear fuel charging/discharging and position automatic tracking system 100 according to the present disclosure further includes an alarming device 70 and a monitoring device 80.

The monitoring device 80 communicates with the processing device 40 and is used to monitor whether the moving position of the charging/discharging machine 60 or the clamped fuel assembly 10 is consistent with the information in the refueling scheme.

The alarming device 70 communicates with the processing device 40, and issues an alarm when the monitoring device 80 monitors that the moving position of the charging/discharging machine or the clamped fuel assembly is inconsistent with the information in the refueling scheme. The alarm may be at least one of sound, light, and electrical signals.

In an embodiment, when the fuel assembly 10 or the insert 20 leaves a certain position of the core or the spent fuel pool 90, upon receiving the network signal sent by the charging/discharging machine 60 for moving the fuel assembly 10 and the insert 20, the refueling scheme is split into first correspondence information having the first data structure and second correspondence information having the second data structure.

When performing the charging/discharging operation, the processing device 40 pushes the refueling scheme, represented by the third data structure shown in Table 3 and stored in the system database 30, to the charging/discharging machine 60 through the network, so that the charging/discharging machine 60 sequentially performs actions for moving the fuel assemblies 10 according to this scheme. The charging/discharging machine 60 sends a network signal to the processing device 40 when moving the fuel assembly 10 out of the initial position or into the target position. The network signal includes a serial number and an identifier which describes the action direction of the charging/discharging machine when sending the signal. After receiving the network signal sent by the charging/discharging machine 60, the processing device 40 decomposes the data recorded in Table 3 into the first data structure of Table 1 and the second data structure of Table 2, fills in the required data, records the current time as the start time or end time and saves the same into the system database 30. At the same time, the monitoring device 80 monitors whether the actions performed by the charging/discharging machine 60 are consistent with the predetermined charging/discharging plan, if not, an alarm is issued to alert the staff to check and verify. The system issues the alarm through sound, light signals, etc.

By monitoring the charging/discharging machine, the present disclosure realizes the real-time movement management of the nuclear fuel assemblies 10 on the charging/discharging machine 60, thereby improving the accuracy of charging/discharging of nuclear reactors and the efficiency of charging/discharging.

In an embodiment, the processing device 40 further includes an information updating module 409 which is used for updating the correspondence information when the fuel assembly 10 or the insert 20 enters or leaves a certain position in the core of the nuclear reactor or the spent fuel pool 90.

Updating the correspondence information includes: when the fuel assembly 10 or the insert 20 enters a certain position in the core or the spent fuel pool 90, a new piece of data is created according to the first data structure or the second data structure, in which the start time is set as the current time and the end time is set as empty; and when the fuel assembly 10 or the insert 20 leaves a certain position in the core or the spent fuel pool 90, the end time in the information representing the original correspondence is set as the current time.

In an embodiment, the processing device 40 further includes a distribution monitoring module 410, which is used to analyze and obtain a distribution situation of all fuel assemblies 10 and inserts 20 by searching for records, in which the start time is not empty and the end time is empty, in the correspondence information.

In another embodiment, the processing device 40 further includes an information tracking module 411. The system database 30 further stores a historical record of the correspondence information, and the information tracking module 411 is adapted to track a position change and a movement situation of the fuel assemblies 10 and the inserts 20 by reading the historical record of the correspondence information.

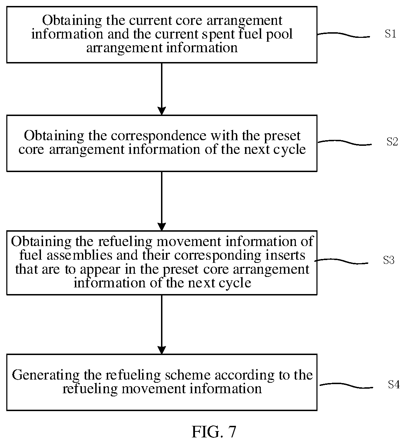

FIG. 7 is a flowchart of a nuclear fuel charging/discharging and position automatic tracking method according to a specific embodiment of the present disclosure.

As shown in FIG. 7, the present disclosure also provides a nuclear fuel charging/discharging and position automatic tracking method, which is implemented by using the above-mentioned nuclear fuel charging/discharging and position automatic tracking system 100, and the method includes the following steps.

At Step S1, the current core arrangement information and the current spent fuel pool arrangement information is obtained.

At Step S2, the correspondence with the preset core arrangement information of the next cycle is obtained according to the current core arrangement information and the current spent fuel pool arrangement information.

At Step S3, the refueling movement information of fuel assemblies and their corresponding inserts that are to appear in the preset core arrangement information of the next cycle is obtained according to the correspondence of the current core arrangement information and the current spent fuel pool arrangement information with the preset core arrangement information of the next cycle.

At Step S4, the refueling scheme is generated according to the refueling movement information.

For the specific implementation of the nuclear fuel charging/discharging and position automatic tracking method, one can refer to the implementation of the above-mentioned nuclear fuel charging/discharging and position automatic tracking system, which will not be described again here.

By the nuclear fuel charging/discharging and position automatic tracking system and method according to the present disclosure, a refueling scheme is automatically generated according to the core arrangement information and spent fuel pool arrangement information in its own system database 30, thereby simplifying the data processing and conversion during the charging/discharging process, improving the work efficiency, reducing the risk of errors in core charging/discharging operations, and ensuring the safety of core running.

The above are only preferred embodiments of the present disclosure, and are not intended to limit the present disclosure. For those skilled in the art, the present disclosure may have various modifications and changes. Any modifications, equivalent replacements, improvements, etc. made within the ideas and principles of the present disclosure shall be included in the protection scope of the present disclosure.

## Claims

1. A nuclear fuel charging/discharging and position automatic tracking system, comprising:
fuel assemblies provided with first identification information capable of uniquely identifying the fuel assemblies;
inserts arranged in the fuel assemblies and provided with second identification information capable of uniquely identifying the inserts;
a system database storing core arrangement information and spent fuel pool arrangement information, wherein the core arrangement information includes the first identification information corresponding to each of the fuel assemblies in a core of a nuclear reactor, the second identification information corresponding to each of the inserts in the core of the nuclear reactor, correspondence information of each fuel assembly and its corresponding insert in the core of the nuclear reactor, and position information of each fuel assembly in the core of the nuclear reactor, and the spent fuel pool arrangement information includes the first identification information corresponding to each of the fuel assemblies in a spent fuel pool, the second identification information corresponding to each of the inserts in the spent fuel pool, correspondence information of each fuel assembly and its corresponding insert in the spent fuel pool, and position information of each fuel assembly in the spent fuel pool; and
a processing device configured to establish correspondence with preset core arrangement information of a next cycle and configure refueling movement information for each of the fuel assemblies and its corresponding insert according to current core arrangement information and current spent fuel pool arrangement information, so as to generate a refueling scheme.

2. The nuclear fuel charging/discharging and position automatic tracking system according to claim 1, wherein the processing device comprises:
a relationship establishing module configured to obtain the current core arrangement information and the current spent fuel pool arrangement information, and establish correspondence with the preset core arrangement information of the next cycle according to the current core arrangement information and the current spent fuel pool arrangement information; and
a refueling scheme generating module configured to configure corresponding refueling movement information for fuel assemblies and their corresponding inserts in the preset core arrangement information of the next cycle according to the correspondence of the current core arrangement information and the current spent fuel pool arrangement information with the preset core arrangement information of the next cycle, so as to generate the refueling scheme.

3. The nuclear fuel charging/discharging and position automatic tracking system according to claim 2, wherein the relationship establishing module includes:
an information merging module configured to read the current core arrangement information and the current spent fuel pool arrangement information from the system database, and merge the current core arrangement information and the current spent fuel pool arrangement information to form first spent fuel pool arrangement information; and
a correspondence establishing module configured to establish correspondence consistent with the preset core arrangement information of the next cycle according to the first identification information corresponding to each fuel assembly and the second identification information corresponding to each insert in the first spent fuel pool arrangement information, so as to form second spent fuel pool arrangement information.

4. The nuclear fuel charging/discharging and position automatic tracking system according to claim 3, wherein the correspondence establishing module comprises:
a first traversal module configured to traverse the first identification information of all fuel assemblies and the second identification information of their corresponding inserts in the first spent fuel pool arrangement information;
a judging module configured to judge whether the first identification information and the second identification information traversed by the first traversal module are consistent with the preset core arrangement information of the next cycle;
a corresponding module configured to establish correspondence, which is consistent with the preset core arrangement information of the next cycle, between the first identification information of all fuel assemblies to be moved into the core and the second identification information of inserts in the first spent fuel pool arrangement information, so as to form the second spent fuel pool arrangement information; and
a second traversal module configured to traverse the second spent fuel pool arrangement information and input the first identification information of fuel assemblies and the second identification information of their corresponding inserts that appear in the preset core arrangement information of the next cycle into the refueling scheme generating module, so as to configure corresponding refueling movement information.

5. The nuclear fuel charging/discharging and position automatic tracking system according to claim 1, wherein the system further comprises:
an identifying device configured to identify the first identification information of the fuel assemblies and the second identification information of their corresponding inserts; and
a charging/discharging machine configured to communicate with the processing device and execute operation instructions sent by the processing device according to the refueling scheme, so as to realize movement of the fuel assemblies and the inserts.

6. The nuclear fuel charging/discharging and position automatic tracking system according to claim 5, wherein the charging/discharging machine comprises a communication device, a driving device and a movement execution device,
wherein the communication device is configured to receive and store the refueling scheme pushed by the processing device;
wherein the driving device is configured to drive, after receiving the refueling scheme, the movement execution device to sequentially execute movement actions of the fuel assemblies and their corresponding inserts according to the refueling scheme; and
wherein the movement execution device is configured to execute a movement action after the identifying device identifies the first identification information of a corresponding fuel assembly and the second identification information of its corresponding insert.

7. The nuclear fuel charging/discharging and position automatic tracking system according to claim 6, further comprising an alarming device and a monitoring device,
wherein the monitoring device communicates with the processing device and is configured to monitor whether a moving position of the charging/discharging machine or a clamped fuel assembly is consistent with information in the refueling scheme; and
wherein the alarming device communicates with the processing device and is configured to issue an alarm when a monitoring result of the monitoring device shows that the moving position of the charging/discharging machine or the clamped fuel assembly is inconsistent with the information in the refueling scheme.

8. The nuclear fuel charging/discharging and position automatic tracking system according to claim 1, wherein the correspondence information comprises first correspondence information and second correspondence information,
wherein the first correspondence information comprises the first identification information of the fuel assemblies and their position information, and start time and end time when correspondence between the fuel assemblies and their positions is established and ends; and
wherein the second correspondence information comprises the second identification information of the inserts and their position information, and start time and end time when correspondence between the inserts and their positions is established and ends.

9. The nuclear fuel charging/discharging and position automatic tracking system according to claim 8, wherein the processing device further comprises an information updating module configured to update the correspondence information when the fuel assemblies or the inserts enter or leave from a certain position in the core of the nuclear reactor or the spent fuel pool.

10. The nuclear fuel charging/discharging and position automatic tracking system according to claim 9, wherein the processing device further comprises a distribution monitoring module configured to analyze and obtain a distribution situation of all of the fuel assemblies and the inserts by searching for records, in which the start time is not empty and the end time is empty, in the correspondence information.

11. The nuclear fuel charging/discharging and position automatic tracking system according to claim 10, wherein the processing device further comprises an information tracking module,
the system database further stores a historical record of the correspondence information, and the information tracking module is adapted to track a position change and a movement situation of the fuel assemblies and the inserts by reading the historical record of the correspondence information.

12. A nuclear fuel charging/discharging and position automatic tracking method, which is implemented by using the nuclear fuel charging/discharging and position automatic tracking system according to claim 1, wherein the method comprises the following steps of:
obtaining the current core arrangement information and the current spent fuel pool arrangement information, and obtaining the correspondence with the preset core arrangement information of the next cycle according to the current core arrangement information and the current spent fuel pool arrangement information;
obtaining, according to the correspondence of the current core arrangement information and the current spent fuel pool arrangement information with the preset core arrangement information of the next cycle, the refueling movement information of fuel assemblies and their corresponding inserts that are to appear in the preset core arrangement information of the next cycle; and
generating the refueling scheme according to the refueling movement information.
